# EUROPEAN PATENT APPLICATION

(11) **EP 2 432 212 A1**
(43) Date of publication of application: **21.03.2012**
(21) Application number: 10177901.5
(22) Date of filing: 21.09.2010
(51) Int. Cl.: H04N 1/40, H04N 1/56, H04N 1/62

(54) **Method of changing a colour in an electronic raster image**

(71) Applicant: Océ-Technologies B.V., 5914 CA Venlo (NL)
(72) Inventor: Van der Linden, Erwin A. R., 5971 GC, Grubbenvorst (NL); Hermus, Bastiaan J., 5644 EV Eindhoven (NL)
(74) Representative: van Meeteren, Arend Anthonie

(57) **Abstract**

A method of changing a colour in an electronic raster image (10), comprising the steps of:
- transforming the image data of the raster image (10) into a brightness image wherein a brightness value (L) is assigned to each pixel (24; 42);
- specifying a target colour; and
- replacing the colour of each pixel (24; 42) by a colour that has the colour tone of the target colour and a brightness based on the brightness value (L).

## Description

The invention relates to a method of changing a colour in an electronic raster image.

In image processing and reproduction applications, it is frequently desired that the colour of a selected area of an image is changed into a specific target colour. For example, many companies have a company logo in a certain colour and they want this colour to be always faithfully reproduced. Many companies have defined a corporate colour that is characteristic for the company (typically the dominant colour in the company logo) and should be used in the Public Relations and advertising material of the company, so that the public, especially clients, may easily recognise the company simply by its colour. To that end, it is of course essential that the corporate colour is always reproduced with high fidelity and is not subject to substantial fluctuations. However, in view of differing properties and capabilities of colour image recording and reproduction equipment such as scanners, cameras, display screens and colour printers, this object is sometimes difficult to achieve. Even when the colour gamut of the colour display or printer is large enough to reproduce the desired colour, deviations from the desired colour impression may still result from variations in the colour definitions in the electronic document file. For example, such colour variations may result from noise in electric signals in the scanning equipment, from properties of compression algorithms and the like. Further, colour deviations are frequently found at borders between coloured image areas, because pixels in the transition zone between differently coloured areas may have all kinds of colours. And of course wrong colour specifications can also be caused by the fact that the designer of the document simply assigned the wrong colour specification to certain document objects.

When document objects are encoded as vector graphics, an error in the colour definition for the given objects may easily be corrected by suitably changing the colour definition for those objects. However, when the document objects are represented as a raster images or a document file page as a whole is a raster image that has been obtained by means of a digital camera or scanner, the change of the colour has to be effected pixel by pixel. Commercial image processing software provides tools that permit to designate a certain colour, e.g., by designating a pixel or a small image area that has this colour (colour picking), and to replace the colour of all pixels in the selected area by a different one.

However, electronic raster images will typically include a certain inevitable amount of colour noise, and this noise may result in undesired artefacts being produced in the conventional colour change procedure.

It is therefore an object of the invention to provide a method of changing a colour in an electronic raster image, which method is less sensitive to colour noise and permits to faithfully change the colour impression of a selected image area.

According to the invention, this object is achieved by a method comprising the steps of:
- transforming the image data of the raster image into a brightness image wherein a brightness value is assigned to each pixel;
- specifying a target colour; and
- replacing the colour of each pixel in the brightness image by a colour that has the colour tone of the target colour and a brightness based on the brightness value.

The brightness image may be considered as a black and white copy of the selected area in the original image, wherein the brightness value designates the grey level of the pixel in the black and white image. Consequently, pixels that have a different colour tone (the term colour tone refers to all colour properties except brightness) but the same brightness in the original image will be assigned the same brightness value and will therefore be indistinguishable in the brightness image. Thus, by first transforming the image data into such a brightness image, all colour noise in the selected image area is successfully eliminated. Then, in a second step, the colour of each pixel is replaced by the target colour or, more specifically, a colour value that has the same colour tone as the target colour. The brightness of the pixel may vary depending on the brightness value in the brightness image. For example, a pixel which has the smallest brightness value (black) in the brightness image may be transformed into a pixel that has the specified target colour, and all pixels that have a larger brightness will be transformed into colour pixels having the colour tone of the target colour and a brightness proportional to that of the brightness value. Of course, a non-linear relation between the brightness values and brightnesses of the colour pixels in accordance with any suitable gradation curve may also be specified, if desired.

In a preferred embodiment, the brightness image may be subjected to filtering and scaling procedures before it is re-transformed into a monochromatic image in the target colour. In particular, the brightness image may be scaled such that the pixels in the image that have the smallest brightness value are turned "black" (brightness value 0) while the brightness values of all other pixels are scaled in proportion thereto. In this way, the brightness images can be regularised to assure that even source images that have slightly different brightnesses will be transformed into monochromatic images that have exactly the same colour impression.

Thresholding and filter procedures may be applied, for example, for eliminating black text in the selected image area before the brightness image is regularised, for removing light speckles in the white background areas, and the like.

A preferred embodiment of the invention will now be described in conjunction with the drawings, wherein:
- Fig. 1: shows an image of a brochure that shall be subject to a colour change processing;
- Figs. 2 to 4: pixel matrices illustrating causes for artefacts;
- Figs. 5 to 8: histograms illustrating scaling procedures to be applied to a brightness image;
- Fig. 9: a graph illustrating the brightness scaling procedure;
- Figs. 10 to 12: histograms illustrating optional filtering procedures to be applied to the brightness image;
- Fig. 13: an enlarged detail of a pixel images to be processed in accordance with the invention;
- Fig. 14: a colour map of the pixel image shown in Fig. 13;
- Fig. 15: a colour map of the pixel image of Fig. 13 after colour replacement processing;
- Fig. 16: a flow diagram of the method according to the invention; and
- Figs. 17 to 22: operation windows of a computer application implementing the invention.

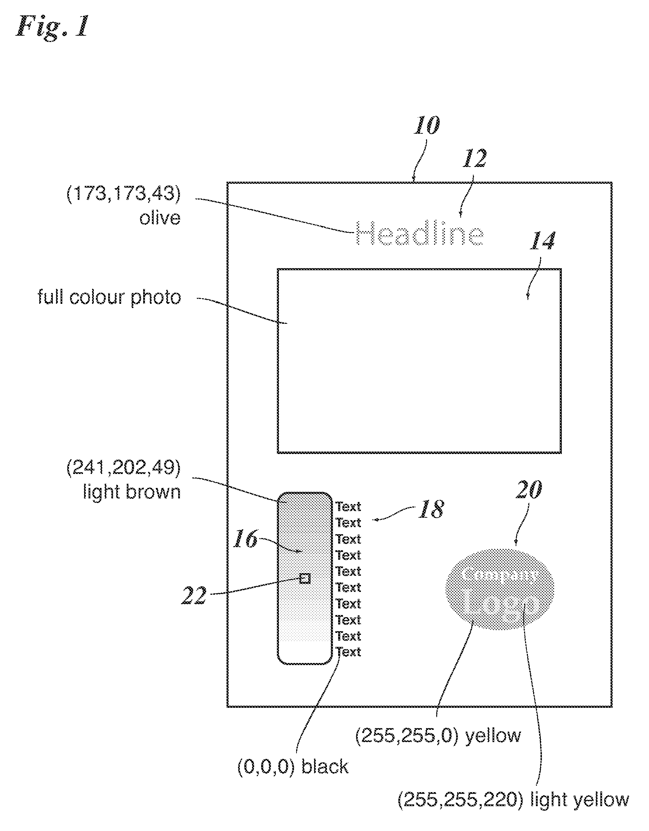

Fig. 1 shows an example of an electronic raster image 10, e.g. a page of an advertising brochure of a company. The raster image 10 is a colour image that is provided as an electronic file wherein a colour value is assigned to each pixel of the image. As is generally known, the colour values may be given in the RGB colour space or the CMYK colour space, for example.

In the example shown, the contents of the raster image 10 comprise a number of distinct areas, namely a headline 12, a full colour image (photo) 14, a bar-shaped graphical element 16, a text area 18 disposed adjacent to the graphical element 16, and a company logo 20. The colours of the headline 12, the graphical element 16 and the company logo 20 are indicated in Fig. 1 by their coordinates in the RGB colour space (with the value of each colour component ranging from 0 to a maximum of 255) and by the common name of the colour. The company logo 20 is composed of three colours: a background in plain yellow, the word "Logo" in light yellow, and the word "Company" in white.

While the photo 14 will include a large range of different colours and the text 18 will be in black, the headline 12, the element 16 and the company logo 20 have a similar yellowish colour tone. Ideally, the colour tone of these three image areas, i.e. the headline 12, the graphical element 16 and the company logo 20, should be exactly the same and should be identical with the colour tone of a corporate colour of the company, e.g. the spot colour PANTONE^{®} 14-0848 "mimosa", which closely matches the RGB coordinates (238, 192, 80) in a particular RGB colour space.

A typical reason for the differences in colour tone that have been indicated in Fig. 1 may be that the image 10 has been composed by importing items from different sources. For example, the headline 12 and the element 16 may have been scanned-in with different scanning equipment and/or under different lighting conditions, whereas the company logo 20 may have been generated as vector graphics on a computer and then transformed into a pixel-based image format such as JPEG.

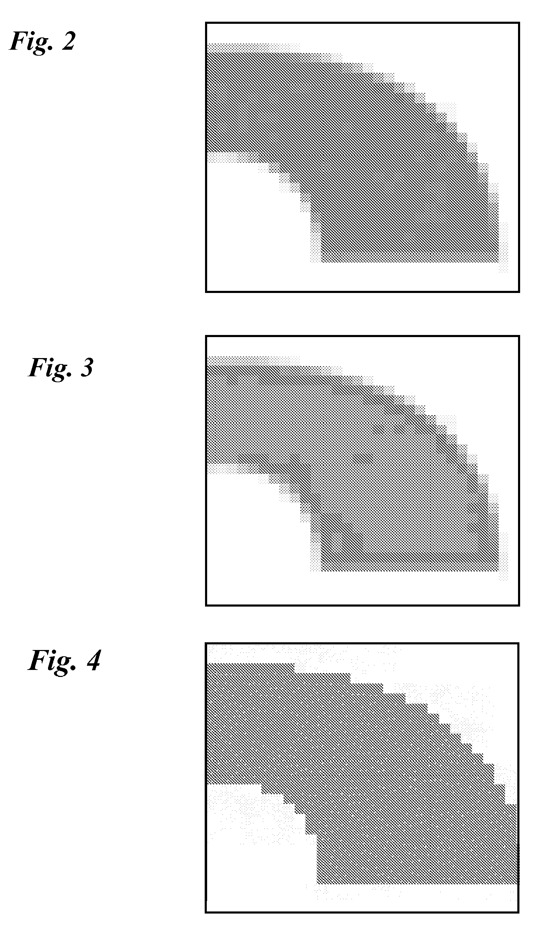

What is needed for making the colour tone of the headline 12, the element 16 and the company logo 20 uniform and identical with the corporate spot colour "mimosa" is a suitable colour change operation. A straightforward colour change mechanism that is available in most commercial image processing software packages starts with a step of designating the colour (colour tone) that is to be replaced, e.g., by clicking onto an image area where this colour is present. The software will then search the entire image for pixels having essentially (with certain tolerances) the same colour tone. Then, "mimosa" would be specified as the target colour, and all the pixels that have been found by the software would be converted into pixels with the colour tone of the target colour. However, this procedure may result in undesired artefacts. Some examples of possible artefacts will now be explained in conjunction with Figs. 2 to 4.

Fig 2 shows a partial black-and-white presentation of a scanned capital letter C, which is intended to have one particular colour. In case this colour should be modified and the conventional mechanism is used to select the relevant pixels, there is a large chance that either too many pixels are selected, when the colour tolerance is set too high, or too little pixels, when the colour tolerance is set too low.

Fig 3 shows the effect after colour replacement when too little pixels were selected. Because the colour of the border pixels was not changed, a strange halo effect occurs.

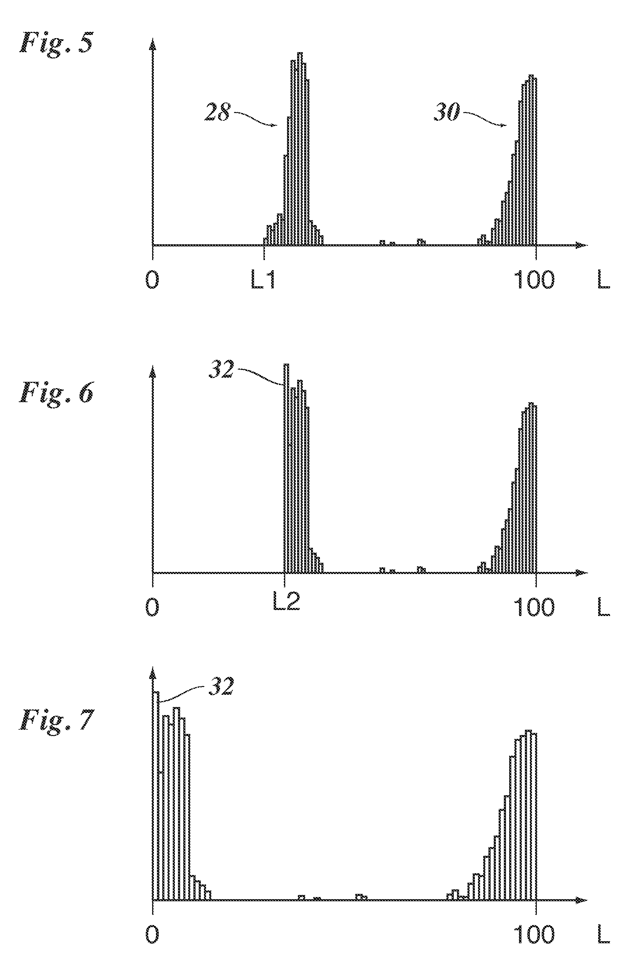

Fig 4 shows the effect that can be expected when too many pixels were selected. This time all border pixels did change colour, but introduce a kind of staircasing effect. Preferred embodiments of a colour change process that suppresses such artefacts will now be described in conjunction with Figs. 5 to 22.

In a first step, the image or the selected area of the image in which the colour shall be replaced by the target colour is transformed into a brightness image. In this brightness image, each pixel is represented only by a single value that indicates the brightness or lightness or grey-value of the pixel. As a consequence, all colour noise in the original image is eliminated.

Fig. 5 shows a histogram of such a brightness image. The brightness has been indicated by the L-value in the Lab colour space (with L = 0 for black and L = 100 for white). In the example shown, the brightness image results from an essentially monochromatic image such as a company logo, wherein most of the pixels are either white background or have an essentially uniform colour. As a result, the histogram has a relatively large peak 28 around a brightness value that corresponds to the average brightness of a coloured area, and another peak 30 formed by the white or almost white background. In the example shown, the peak 30 is relatively broad, which means that the white background includes light speckles, as is frequently the case when an image has been compressed (e.g. into a JEPG file). As is further shown in Fig. 5, the darkest pixels in the image have a brightness value L1. In a simple implementation of the method according to the invention, these pixels would be transformed into coloured pixels having the target colour, e.g. a spot colour, with an L-value that may be smaller or larger than L1, depending upon the definition of the target colour.

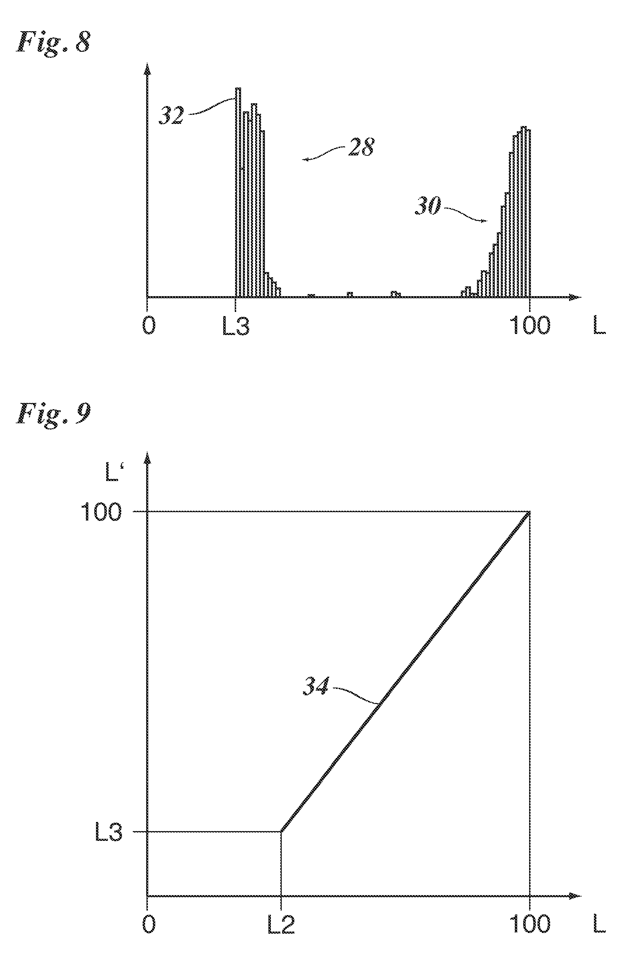

In practice, the darkest pixels in the brightness image will not be the pixels that form the coloured area of the logo but will be pixels that result from (brightness) noise. In order to eliminate this noise, a threshold value L2 (Fig. 6) is selected which is larger than L1 but smaller than the maximum of the peak 28, and all the pixels having an L-value smaller than L2 are changed by increasing their L-value to L2, producing a large bar 32 at L2 in Fig. 6. Then, as is shown in Fig, 7, the L-values are scaled about a fixed point at L = 100 until the darkest pixels (bar 32) assume the brightness value "0" (black). Then, as is shown in Fig. 8, the L-values are re-scaled about L = 100 until the L-value of the darkest pixel (bar 32) is lifted to a value L3 which is the L-value of the target colour.

A graph 34 in Fig. 9 illustrates the re-scaled L-values (L') as a function of the original L-values in the brightness image and illustrates the combined effect of the scaling procedures shown in Figs. 7 and 8. In this example, the graph 34 corresponds to a linear scaling function, but a non-linear scaling function would also be possible.

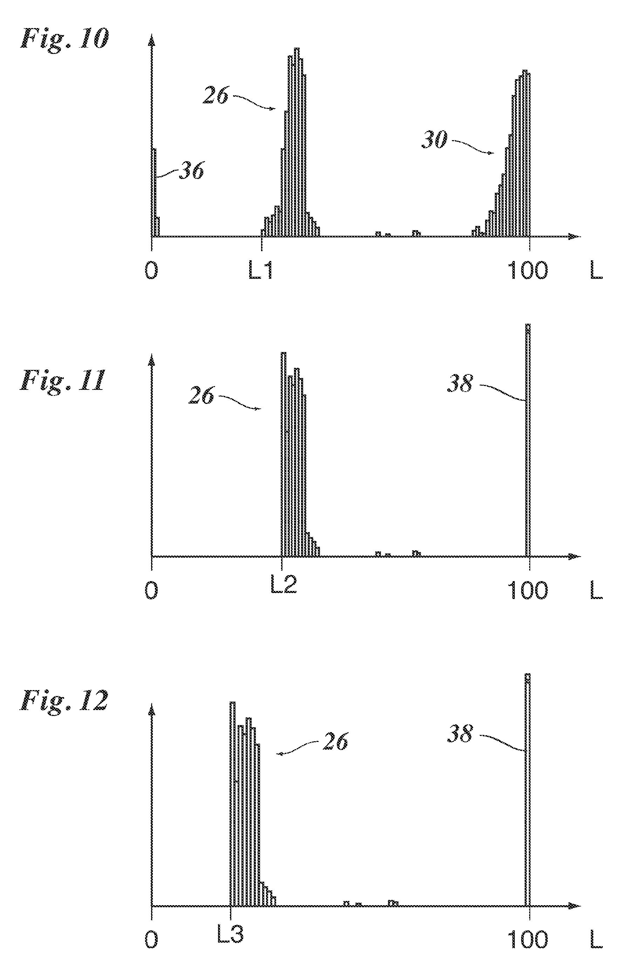

Figs. 10 to 12 illustrates a modified embodiment wherein the brightness image is subjected to several filtering procedures before it is scaled. Fig. 10 shows a histogram of a brightness image having some (unwanted) black pixels with L-values close to "0". Such a histogram would be obtained, for example, when the image element 16 in Fig. 1 would be selected for the colour replacement procedure, and the selected image area included an edge portion of the text 18. In a first filtering step, these black pixels (pixels with an L-value below a certain threshold that is smaller than L1) are turned white, so that (during the colour conversion process) the text is eliminated.

An alternative possibility to prevent adjacent text from disturbing the colour change procedure to be applied to a graphical object such as a company logo would be to select the image area by means of object recognition which permits to clearly distinguish between the company logo or other graphical elements and the text. A suitable object recognition method has been described in EP 0 629 078 B1, for example.

In another filter procedure, the white background is "cleaned" by turning the white speckles (all pixels having an L-value above a certain threshold) into white pixels.

The results of both filtering steps are shown in Fig. 11. It can be seen that the peak 30 in Fig. 10 has been transformed into a single bar 38 at L = 100. Further, in Fig. 11, the threshold L2 has been applied to the peak 26, similarly as in Fig. 6.

Fig. 12 shows the histogram finally resulting from the filtering and re-scaling procedure. The corresponding brightness image for which the histogram in Fig. 12 is representative will then be transformed into a colour image, e.g. by taking the brightness value of each pixel as the L-value in the Lab colour space and setting the a- and b-values to the values specified in the colour definition of the target colour.

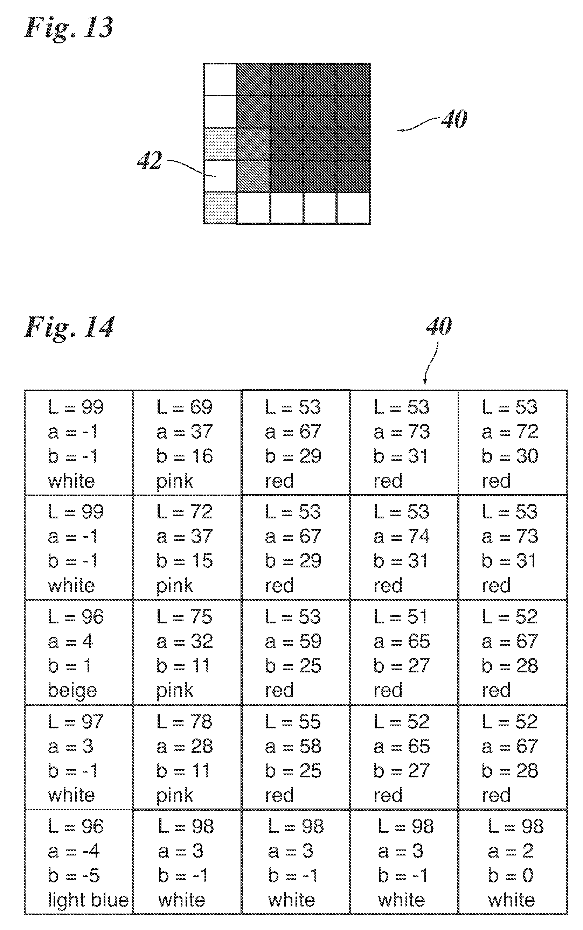

The effect of this procedure is further illustrated in Figs. 13 to 15.

Fig. 13 shows a block 40 formed by 5 x 5 pixels 42 in an image area that has been selected for colour replacement. More specifically, the block 40 shows a lower left corner of a rectangular coloured area, e.g., a company logo. However, due to noise, the colours and brightness values in both, the coloured area and the white background are subject to slight fluctuations.

Fig. 14 shows a colour map of the block 40 in the original image. In this colour map, the colour of each pixel 42 has been given by its L-, a- and b-values and by the common name of the colour. The not perfectly white pixels in the third and fifth lines of the first column can be recognised by their L-value of 96 which is significantly smaller than 100. The pixels in the second column in Fig. 14 are located on the border between the red area of the company logo and the white background and therefore have several shades of pink. This shading at borders is desirable because it helps to smoothen-out staircase effects that would otherwise be caused by the finite resolution of the pixel image. This is why these shading effects should be preserved in the colour replacement procedure even if the graphical object, e.g., the company logo, as such, does not have any shades.

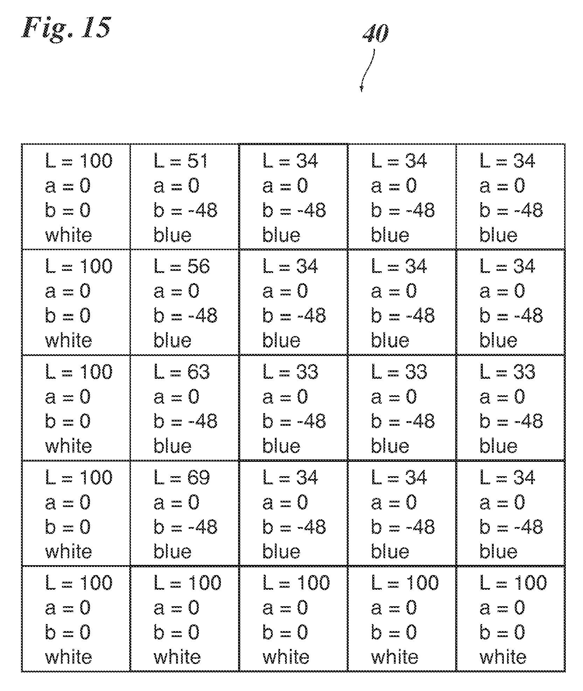

Fig. 15 shows the same block 40 in a state resulting from the filtering, scaling and colour replacement procedures that have been described above. It can be seen in Fig. 15 that the pixels in the left column and the bottom line are perfectly white, thanks to the filter procedure for the white background.

All the non-white pixels have been turned essentially into the target colour, which, in this example, is defined by the Lab values L = 33, a = 0, b = -48 (blue). It can be seen that the darkest pixels (in the third line) have exactly this target colour, whereas the other pixels in the coloured area have slightly lighter shades of this colour. The pixels on the border (second column) have significantly larger L-values (between 69 and 78), so that the transition at the border is desirably smoothened-out.

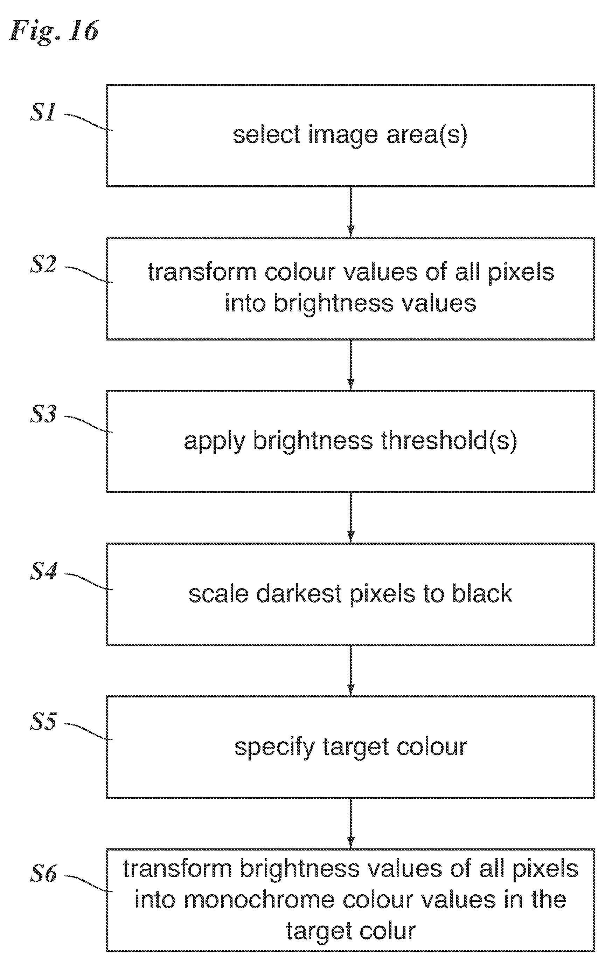

The essential steps of the method that has been described above are summarised in Fig. 16.

In step S1, one or more image areas are selected in the image 10. For example, the graphical element 16 may be selected. The selection of image areas may be achieved in any known way, for example by displaying the image 10 on a computer screen and drawing a rectangular box around the selected area, encircling the selected area with a "lasso", and the like. Optionally, the entire image may be selected.

In step S2, the selected image area is transformed into a brightness image.

Step S3 includes the (optional) filtering or thresholding procedures that have been illustrated in Fig. 11.

Step S4 includes the scaling procedure that has been illustrated in Fig. 7.

In Step S5, the user specifies a target colour. If the target colour is a spot colour as defined in any common standard, it is sufficient to indicate this spot colour, and the exact colour definition can then be looked-up in a spot colour library. If the target colour is not a spot colour, the colour definition has to be entered manually.

Finally, in step S6, the brightness image is re-transformed into a monochromatic colour image in which the darkest pixels have the target colour and the brighter pixels have the same colour tone but a lighter tint.

It is observed that the selection of the image area or areas in step S1 may influence the final result. For example, if the headline 12, the graphical element 16 and the company logo 20 in Fig. 1 would be considered as a single image area to which the colour change process is applied, then the darkest pixels would be those of the headline 12, and these pixels would be turned into the corporate colour, whereas the somewhat lighter pixels of the element 16 and the company logo 20 would assume lighter shades of the target colour and would thus still differ from the true corporate colour. On the other hand, when the headline 12, the element 16 and the company logo 20 are treated as different image areas and are subjected to the colour change process separately, then the darkest pixels of all three elements will be turned into the true corporate colour. The invention may be implemented in a computer application such as the application PRISMAprepare® pre-press marketed by Océ.

Such a pre-press computer application may be implemented in a server computer located in a centralized printing facility such as is often called a "central repro department" (CRD) and connected to one or more printers in the CRD and to remote user workstations, via appropriate digital network connections.

In operation, users prepare documents on their workstations and submit the resulting document data files to the CRD for printing. The files for printing are received by the server and may, under the control of a CRD operator, be prepared for printing and transferred to a printer device.

The pre-press computer application running in the server may be used for the preparation and editing of a document file and specifying the print processing of the print job that produces the prints according to the document file submitted by the users. This software includes, among others, page editing functionality, which, in turn, includes the colour changing functionality according to the present invention.

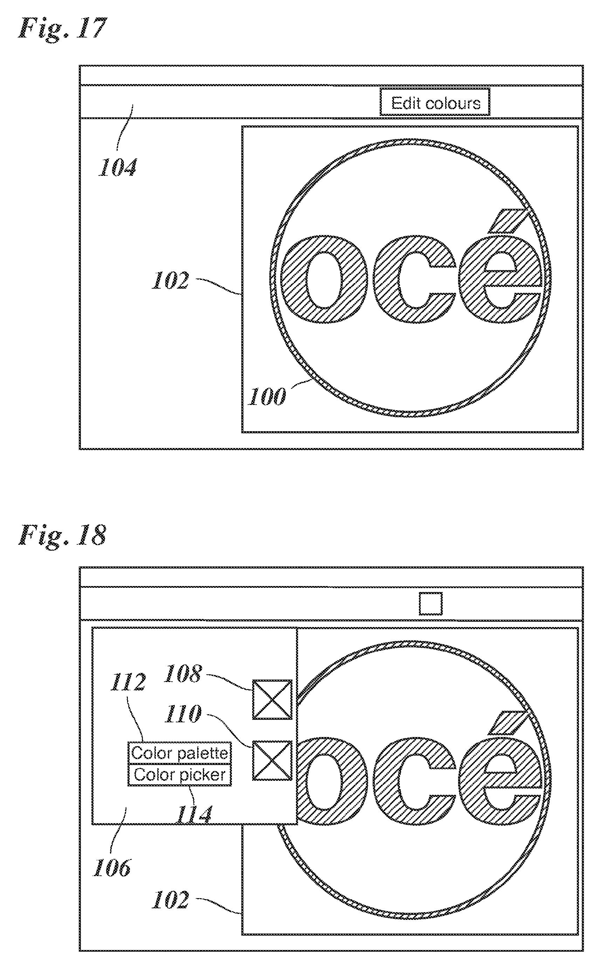

Fig. 17 shows an operation window of the computer application, wherein an object, a logo image 100, is displayed in a preview pane 102. The object 100 is an image of individual pixels that are all separately defined by their own colour coordinates, which in this example are generally red (many different colours close to the red spot colour intended for the logo) on a white background. The borders of the red areas generally include pixels that deviate more from the spot colour due to the pixels overlapping both logo and background. This has an additional advantage that the border pixels, that are thus generally lighter than the body colour, simulate a smooth appearance of the borders of the logo image.

For this example, it is assumed that the logo colour must be replaced by another spot colour.

The operation starts with an operator clicking a function "Edit colours" from the toolbar 104 of the application. As shown in Fig. 18, upon the selection, a pop-up window 106 opens. This window includes two rectangular areas 108, 110 which, when the object 100 has a single colour, show the single colour of the object "Before" (108) and "After" (110) the colour replacement operation. In the present example, the object does not have a single colour, as explained above, and therefore, a cross is shown instead of a single colour.

Further, the pop-up window 106 gives two possibilities to select a new colour for the object, namely, selection of a colour from a so-called "Colour palette" (112), which is a set of user-selected and -stored colours, or indication of a Colour picker (114) for selecting a desired colour from another place in the image. Since the image of the example does not have other (intended) colours, the Colour picker is not a relevant possibility.

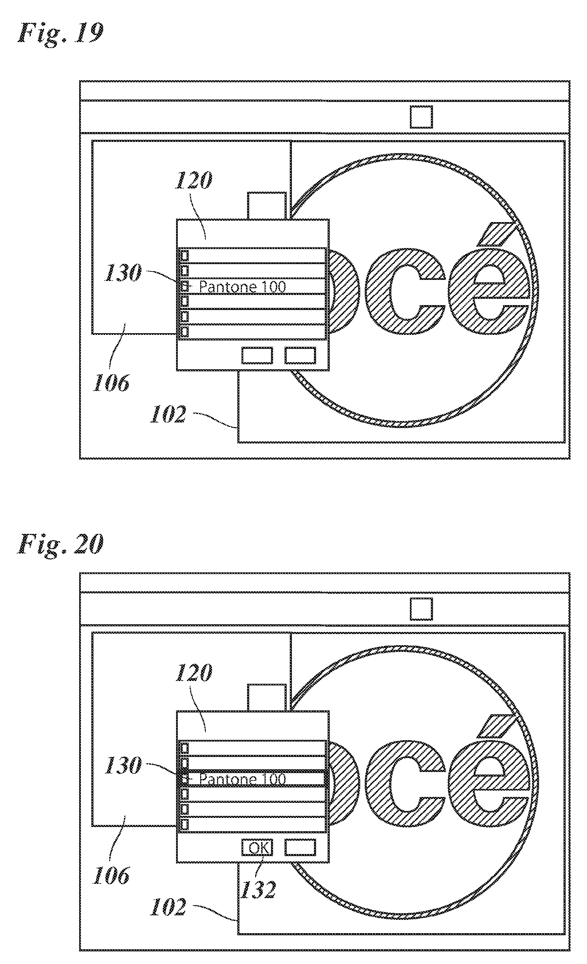

The operator will now select the Colour palette, upon which a new window 120 pops up, as shown in Fig. 19. The Colour palette window contains several colours, and it is now assumed that operator selects one thereof, in this case "Pantone 100", by clicking.

In reaction, the bar 130 of the selected colour is highlighted, as shown in Fig. 20.

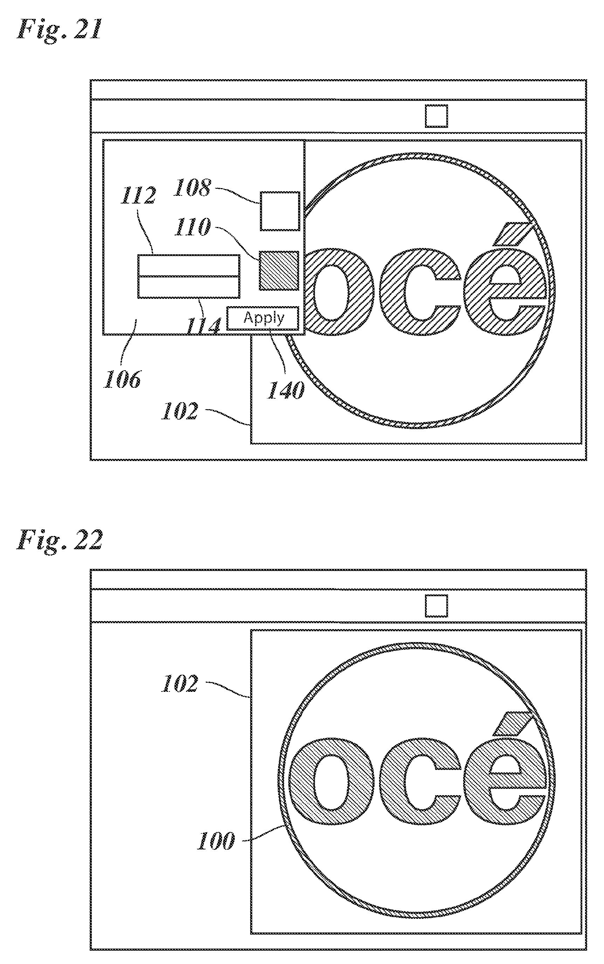

The operator confirms his selection by clicking an OK button 132, whereupon the Colour palette window closes and the selected colour is now shown in the "After" area 110 of the window 106 (Fig. 21).

The operator will now apply the selected colour to the object 100 by clicking an "Apply" button 140 in window 106. As a result, as shown in Fig. 22, all colours different from the background colour are replaced by the selected colour "Pantone 100", while the colour nuance is preserved, as described hereinabove. More in particular, the border pixels of the object stay generally lighter than the body colour of the object, such that the smooth appearance of the logo borders remains.

The user interaction, as described above, for applying the new colour to the raster image is exactly the same as it is for replacing colours for vector and text objects.

It is even possible to select all three image types (raster, text and vector) and apply the new colour in a single action.

## Claims

1. A method of changing a colour in an electronic raster image (10), comprising the steps of:
- transforming the image data of the raster image (10) into a brightness image wherein a brightness value (L) is assigned to each pixel (24; 42);
- specifying a target colour; and
- replacing the colour of each pixel (24; 42) by a colour that has the colour tone of the target colour and a brightness based on the brightness value (L).

2. The method according to claim 1, wherein said brightness based on the brightness value (L) is a brightness that is calculated from the brightness value (L) and the brightness of the target colour.

3. The method according to claim 2, wherein the colour of the pixels in the selected area that have the smallest brightness value is replaced by the target colour, and the colours of the other pixels in the selected area are replaced by lighter tints of that colour.

4. The method according to claim 3, wherein the brightness image is subjected to a scaling process in which the brightness scale is changed such that the brightness value of the darkest pixels in the selected area is changed to a standard brightness.

5. The method according to claim 4, wherein the brightness image is subjected to a filtering procedure before it is subjected to the scaling process.

6. The method according to claim 5, wherein the filtering procedure includes a thresholding step of eliminating black pixels.

7. The method according to any of the preceding claims, comprising:
- selecting at least one area (12, 16, 20) in the raster image (10); and
- performing the steps of claim 1 separately for each selected area.

8. A software product including program code that, when executed on a programmable processor, causes the processor to perform the method according to any of the claims 1 to 7.

9. A software-implemented document preparation application for use in a system for printing document files, including a module for changing a colour in an electronic raster image, operating in accordance with the method as specified in any one of the claims 1 to 7.
